(19) Europäisches Patentamt
European Patent Office
Office européen des brevets

(11) **EP 2 401 884 B1**

(12) **EUROPEAN PATENT SPECIFICATION**

(45) Date of publication and mention
of the grant of the patent:
**19.07.2017 Bulletin 2017/29**

(51) Int Cl.:
***H04W 72/04*** *(2009.01)*     *H04W 52/24* *(2009.01)*
*H04W 52/28* *(2009.01)*     *H04W 52/36* *(2009.01)*
*H04W 52/38* *(2009.01)*

(21) Application number: **09785817.9**

(22) Date of filing: **24.02.2009**

(86) International application number:
**PCT/IB2009/000336**

(87) International publication number:
**WO 2010/097645 (02.09.2010 Gazette 2010/35)**

(54) **TIME-HOPPING FOR NEAR-FAR INTERFERENCE MITIGATION IN DEVICE-TO-DEVICE COMMUNICATIONS**

ZEITSPRÜNGE FÜR NAH-FERN-STÖRUNGSMINDERUNG BEI DER KOMMUNIKATION VON EINRICHTUNG ZU EINRICHTUNG

SAUT TEMPOREL PERMETTANT UNE LIMITATION DU BROUILLAGE PROCHE-LOINTAIN DANS DES COMMUNICATIONS DE DISPOSITIF À DISPOSITIF

(84) Designated Contracting States:
**AT BE BG CH CY CZ DE DK EE ES FI FR GB GR HR HU IE IS IT LI LT LU LV MC MK MT NL NO PL PT RO SE SI SK TR**

(43) Date of publication of application:
**04.01.2012 Bulletin 2012/01**

(73) Proprietor: **Nokia Technologies Oy**
**02610 Espoo (FI)**

(72) Inventors:
 • **CHARBIT, Gilles**
 **Farnborough**
 **Hampshire GU14 7BX (GB)**
 • **CHEN, Tao**
 **FIN-90570 Oulu (FI)**
 • **HAKOLA, Sami-Jukka**
 **FIN-90540 Oulu (FI)**

(74) Representative: **Ruuskanen, Juha-Pekka et al**
**Page White & Farrer**
**Bedford House**
**John Street**
**London WC1N 2BF (GB)**

(56) References cited:
**EP-A2- 1 480 386**     **US-A1- 2004 160 916**
**US-A1- 2005 152 329**

**Description**

## TECHNICAL FIELD

The exemplary and non-limiting embodiments of this invention relate generally to wireless communication systems, methods, devices and computer programs and, more specifically, relate to techniques for mitigating interference during device-to-device communications.

## BACKGROUND

This section is intended to provide a background or context to the invention that is recited in the claims. The description herein may include concepts that could be pursued, but are not necessarily ones that have been previously conceived, implemented or described. Therefore, unless otherwise indicated herein, what is described in this section is not prior art to the description and claims in this application and is not admitted to be prior art by inclusion in this section.

The following abbreviations that may be found in the specification and/or the drawing figures are defined as follows:

| | |
|---|---|
| 3GPP | third generation partnership project |
| ACK | acknowledge |
| CDMA | code division multiple access |
| CQI | channel quality indicator |
| D2D | device-to-device |
| DL | downlink (eNB towards UE) |
| eNB | EUTRAN Node B (evolved Node B) |
| EPC | evolved packet core |
| EUTRAN | evolved UTRAN (LTE) |
| FDD | frequency division duplex |
| ICI | inter-carrier interference |
| LTE | long term evolution |
| M2M | mobile-to-mobile |
| MAC | medium access control |
| MM/MME | mobility management/mobility management entity |
| NACK | negative acknowledge |
| Node B | base station |
| OFDM | orthogonal frequency division multiplex |
| OFDMA | orthogonal frequency division multiple access |
| O&M | operations and maintenance |
| P2P | peer-to-peer |
| PDCCH | physical downlink control channel |
| PDCP | packet data convergence protocol |
| PDU | protocol data unit |
| PHY | physical layer (Layer 1) |
| PRB | physical resource block |
| PUCCH | physical uplink control channel |
| PUSCH | physical uplink shared channel |
| QAM | quadrature amplitude modulation |
| QPSK | quadrature phase shift keying |
| RB | radio bearer |
| RLC | radio link control |
| RNTI | radio network temporary identifier |
| RRC | radio resource control |
| SC-FDMA | single carrier, frequency division multiple access |
| SGW | serving gateway |
| SINR | signal to interference plus noise ratio |
| TDD | time division duplex |
| TDMA | time division multiple access |
| UE | user equipment |
| UL | uplink (UE towards eNB) |

UTRAN      universal terrestrial radio access network

UWB        ultra-wideband

The specification of a communication system known as evolved UTRAN (EUTRAN, also referred to as UTRAN-LTE or as EUTRA) is currently nearing completion within the 3GPP. As specified the DL access technique is OFDMA, and the UL access technique is SC- FDMA.

One specification of interest is 3GPP TS 36.300, V8.7.0 (2008-12), 3rd Generation Partnership Project; Technical Specification Group Radio Access Network; Evolved Universal Terrestrial Radio Access (E-UTRA) and Evolved Universal Terrestrial Access Network (E- UTRAN); Overall description; Stage 2 (Release 8). This system may be referred to for convenience as LTE Rel-8, or simply as Rel- 8. In general, the set of specifications given generally as 3GPP TS 36.xyz (e.g., 36.211, 36.213, 36.312, etc.) may be seen as describing the entire Release 8 LTE system.

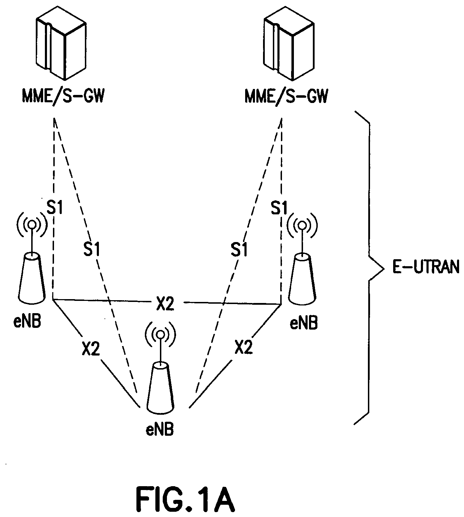

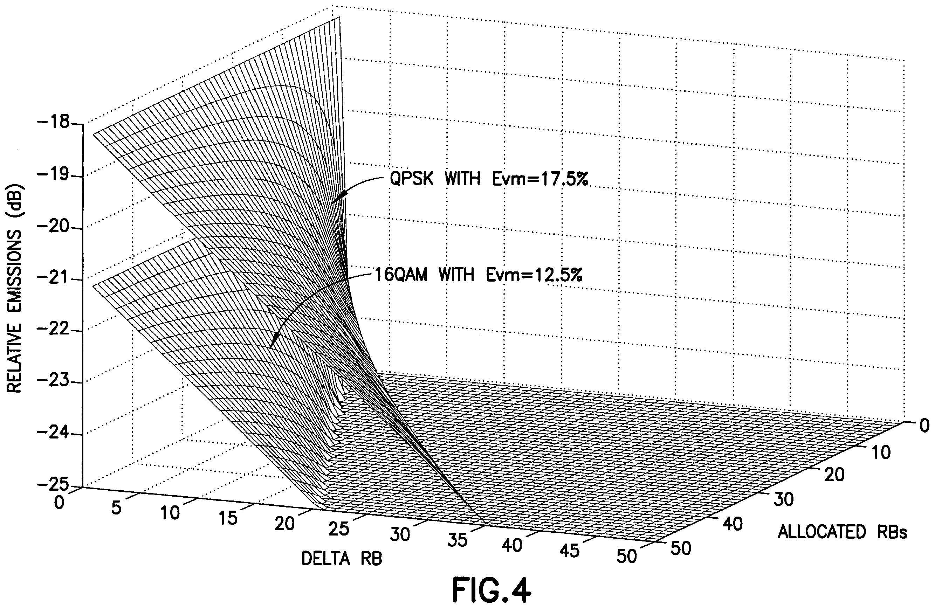

Figure 1A reproduces Figure 4.1 of 3GPP TS 36.300, and shows the overall architecture of the EUTRAN system. The EUTRAN system includes eNBs, providing the EUTRA user plane (PDCP/RLC/MAC/PHY) and control plane (RRC) protocol terminations towards the UE. The eNBs are interconnected with each other by means of an X2 interface. The eNBs are also connected by means of an S1 interface to an EPC, more specifically to a MME (Mobility Management Entity) by means of a S1 MME interface and to a Serving Gateway (SGW) by means of a S1 interface. The S1 interface supports a many to many relationship between MMEs / Serving Gateways and eNBs.

The eNB hosts the following functions:

functions for Radio Resource Management: Radio Bearer Control, Radio Admission Control, Connection Mobility Control, Dynamic allocation of resources to UEs in both uplink and downlink (scheduling);

IP (internet protocol) header compression and encryption of the user data stream; selection of a MME at UE attachment;

routing of User Plane data towards Serving Gateway;

scheduling and transmission of paging messages (originated from the MME);

scheduling and transmission of broadcast information (originated from the MME or O&M); and

measurement and measurement reporting configurations to provide mobility and scheduling.

Of particular interest herein are the further releases of 3GPP LTE targeted towards future IMT-A systems, referred to herein for convenience simply as LTE-Advanced (LTE-A). Reference may be made to 3GPP TR 36.913, V8.0.0 (2008-06), 3rd Generation Partnership Project; Technical Specification Group Radio Access Network; Requirements for Further Advancements for E-UTRA (LTE-Advanced) (Release X). Reference may also be made to 3GPP TR 36.814, V0.3.0 (2009-01), 3rd Generation Partnership Project; Technical Specification Group Radio Access Network; Further Advancements for E-UTRA Physical Layer Aspects (Release X).

Other specifications of interest include:

3GPP TS 36.101, V8.3.0 (2008-09), 3rd Generation Partnership Project; Technical Specification Group Radio Access Network; Evolved Universal Terrestrial Radio Access (E- UTRA); User Equipment (UE) radio transmission and reception (Release 8);

3GPP TS 36.213, V8.5.0 (2008-129), 3rd Generation Partnership Project; Technical Specification Group Radio Access Network; Evolved Universal Terrestrial Radio Access (E- UTRA); Physical layer procedures (Release 8) ;

3GPP TS 36.321, V8.3.0 (2008-09), 3rd Generation Partnership Project; Technical Specification Group Radio Access Network; Evolved Universal Terrestrial Radio Access (E- UTRA); Medium Access Control (MAC) protocol specification (Release 8); and

3GPP TS 36.331, V8.4.0 (2008-12), 3rd Generation Partnership Project; Technical Specification Group Radio Access Network; Evolved Universal Terrestrial Radio Access (E- UTRA); Radio Resource Control (RRC); Protocol specification (Release 8).

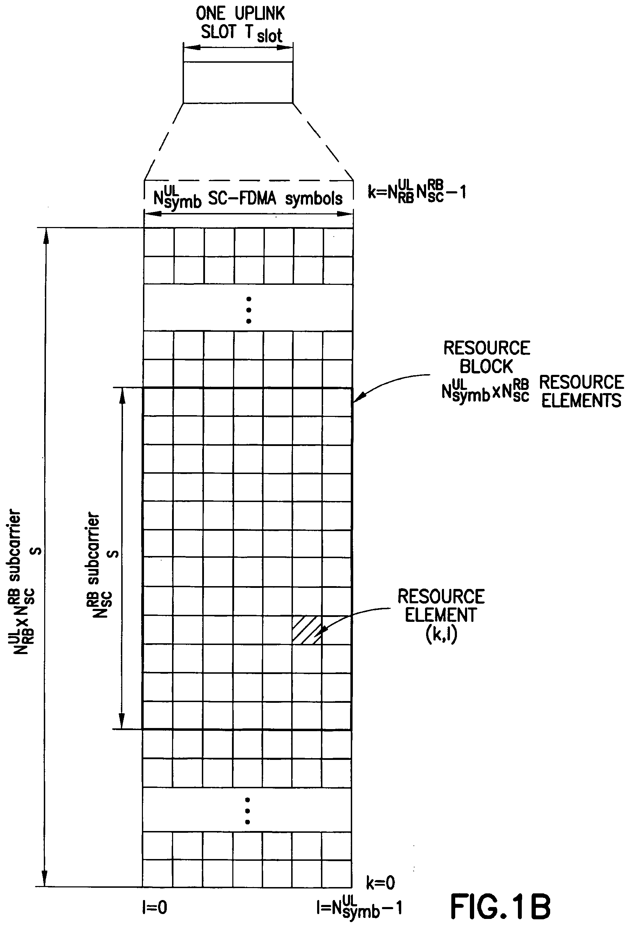

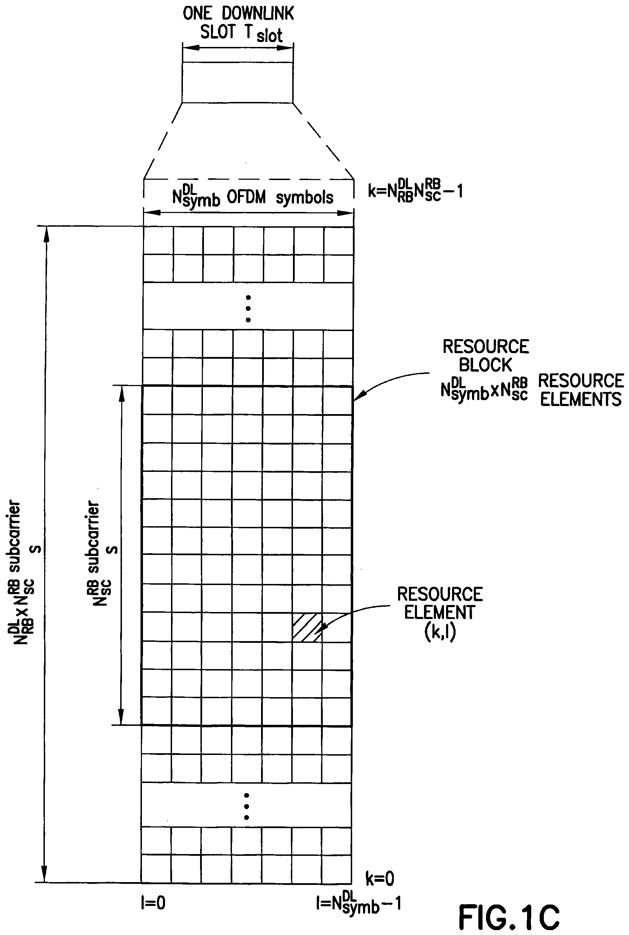

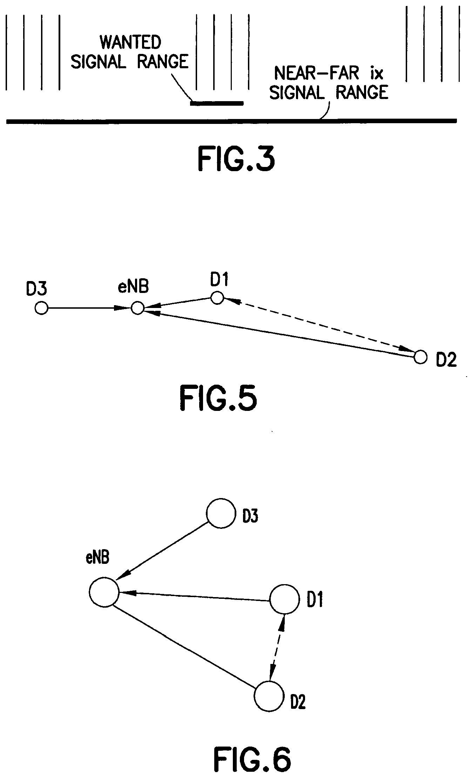

Another specification of interest is 3GPP TS 36.211, V8.5.0 (2008-12), 3rd Generation Partnership Project; Technical Specification Group Radio Access Network; Evolved Universal Terrestrial Radio Access (E-UTRA); Physical Channels and Modulation (Release 8). Figure 1B herein reproduces Figure 5.2.1-1 of 3GPP 36.211, and shows the LTE uplink resource grid, while Figure 1C herein reproduces Figure 6.2.2-1 of 3GPP 36.211, and shows the LTE downlink resource grid. These resource grids can be seen to be characterized by a resource block made up of resource elements, where a particular resource element is defined by one SC-FDMA (UL) or OFDM (DL) symbol within a slot of a particular frequency subcarrier.

A general concept related to FDD or TDD cellular networks, where a direct communication connection between two devices utilizing either FDD or TDD, can be found in WO 2005/060182, "Cellular Communication System". Another document related to the general concept of P2P communication established in a cellular network, in particular in TDD- CDMA/TD-SCDMA, can be found in US7308266, "Method and System for Peer-to-peer Communication Management in Wireless Communication Networks". US 2007/0153747, "Method and Apparatus for Soft Switching", pertains to switching between a peer-to-peer communication mode and a conventional communication mode (UP-UTRAN-DO WN).

Also of interest is a publication "Spread-Time/Time-Hopping UWB CDMA Communication", Mahmood Farhang and Jawad A. Salehi, International Symposium on Communications and Information Technologies 2004 (ISCIT 2004), pp. 1047-1050, and a publication "Time hopping and frequency hopping in ultrawideband systems", Andreas F. Molisch, Jinyun Zhang and Makato Miyake, IEEE Pacific Rim Conference on Communications, Computers and Signal Processing (PACRM), Vol. 2, pp. 541-544, August 2003.

Providing for direct D2D communication in a cellular network makes it possible to reduce transmitter power consumption both in the participating devices and in the base station, to increase cellular network capacity, and to establish enhanced services for the users (see, for example, R1-082813, "M2M Communications", Alcatel-Lucent, 3GPP RAN1#54, 18-22 August 2008). In addition, M2M (or D2D) has been proposed in 3GPP RAN1 meetings to be included in the above-referenced 3GPP 36 TR 36.814 for targeting LTE evolution (see, for example, R1-083850, "M2M Communications", Alcatel-Lucent, 3GPP RAN1#54bis, 29 Sep - 3 Oct 2008).

Near-far interference in D2D communications may be described as the transmission of an interfering UE which is closer to a receiving device than another device transmitting to that receiving device. This results in the received power from some other transmitter than the desired transmitter being greater than that of the desired received signal.

European patent application publication number EP 1,480,386 A2 relates to position based WPAN (Wireless Personal Area Network) management. Based on either the relative position or the specific location of devices within a WPAN, communication between the various devices is managed by grouping the devices into two or more groups. United States patent application publication number US 2005/152329 A1 relates to systems and techniques involving wireless communications, wherein a process, module or communications terminal schedules communications over a frame having a plurality of time slots.

## SUMMARY

The present invention is defined by the appended independent claims. Certain more specific aspects are defined by the dependent claims. In a first aspect, the invention provides a method that comprises determining spatial locations of device pairs involved in device-to-device communications; and semi-persistently allocating radio resources to individual device pairs in accordance with time-hopped timeslot index sequences that are offset from one another so as to reduce an occurrence of interference with other device pairs. In a second aspect, the invention provides an apparatus that comprises a controller configured to semi-persistently allocate radio resources to individual device pairs having determined spatial locations, where the device pairs are involved in device-to-device communications, and where the radio resources are allocated in accordance with time-hopped timeslot index sequences that are offset from one another so as to reduce an occurrence of interference with other device pairs.

## BRIEF DESCRIPTION OF THE DRAWINGS

In the attached Drawing Figures:

Figure 1A reproduces Figure 4.1 of 3GPP TS 36.300, and shows the overall architecture of the EUTRAN system.
Figure 1B reproduces Figure 5.2.1-1 of 3GPP 36.211, and shows the uplink resource grid.
Figure 1C reproduces Figure 6.2.2-1 of 3GPP 36.211, and shows the downlink resource grid.
Figure 2A shows a simplified block diagram of various electronic devices that are suitable for use in practicing the exemplary embodiments of this invention.
Figure 2B shows a more particularized block diagram of a user equipment such as that shown at Figure 2A.
Figure 3 is useful for describing the range of an ADC.
Figure 4 depicts in-band emissions as specified in 3GPP 36.101 for a case of QPSK modulation and for a case of 16QAM modulation.
Figure 5 shows an exemplary case of a D2D pair (D1, D2) and a device (D3) in a cellular connection with an eNB.
Figure 6 shows another exemplary case of a D2D pair (D1, D2) and a device (D3) in a cellular connection with an eNB.
Figure 7 is useful in describing orthogonal resource allocation for various D2D pairs in a same cell and neighboring cell location.
Figures 8A and 8B, collectively referred to as Figure 8, depict resource allocation with time-hopping (Figure 8A), in accordance with the exemplary embodiments of this invention, contrasted with resource allocation without time-hopping (Figure 8B).
Figure 9 is a logic flow diagram that illustrates the operation of a method, and a result of execution of computer program instructions embodied on a computer readable memory, in accordance with the exemplary embodiments of this invention.

## DETAILED DESCRIPTION

The exemplary embodiments of this invention relate to direct device-to-device (D2D), mobile-to-mobile (M2M), terminal-to-terminal (T2T), peer-to-peer (P2P) communication when integrated into a cellular network, e.g., the LTE/LTE-A cellular network specified or being specified in 3GPP. The integration implies that devices (or mobiles, or terminals, or peers, or machines) have a direct physical communication link using radio resources of the cellular network, and thus share the cellular network resources with devices having a normal connection to a base station (e.g., to an eNB). In particular, the exemplary embodiments of this invention relate to a cellular network operating in a FDD mode in which D2D connections utilize a TDD mode, either using the cellular network UL, DL resources controlled by the base station(s).

As was noted above, near-far interference in D2D communications may be described as the transmission of an interfering UE which is closer to a receiving device than another device transmitting to that receiving device. This results in the received power from some other transmitter than the desired transmitter being greater than that of the desired received signal.

There is an impact of the near-far interferer on the analog to digital converter (ADC) range. For example, in LTE FDD cellular access a guard band in the frequency domain separates the Tx and Rx modes at the eNB and UE. Receiving a high-power transmission (e.g., 20-30 dBm) in an adjacent frequency band while receiving a very weak signal (e.g., ~ -100 dBm sensitivity) will swamp out the receiver both at the eNB and the UE. In cellular access, UL power control and timing alignment procedures ensure that UL signals arrive with similar arrival time and power level at the eNB and UE (within fading and shadowing). On the DL, the eNB transmits with same power to all UEs, thereby removing near-far interference.

The ADC and automatic gain control (AGC) functions typically work together to center the dynamic range of the ADC about the stronger signal at the UE receiver, which may be the intended Tx signal or a near-far Tx interfering signal. The resolution of an ADC, denoted by Q, is typically Q = (-V; +V)/N, where V is the maximum magnitude and N the number of quantization levels. Consider as an example a 12-bit ADC converter (4096 levels), and assume that a near-far interferer has 27 dB more power than the desired signal. In this case V is 500 times larger (and Q is 500 times larger) than it would be without the interferer. The desired signal magnitude is represented by about four ADC quantization levels (V/500 ~= 4 * 2V/4096), which results in a severe truncation condition, as is illustrated in Figure 3.

In a practical ADC the desired signal may be removed entirely by the ADC, as some headroom is used as a fading margin to avoid signal truncation due to positive fade. The ADC has typically a quantisation error of up to LSB/2, which will be disproportionately higher for the (smaller) desired signal.

In D2D there is no guard band in the frequency domain separating the Tx from the Rx for all device pairs. D2D devices transmit at different powers depending on how far the devices in the pair are from one another (based path loss, but may also be based on SINR for the D2D link). Although in D2D one may use the TDD mode on the UL sub-band, the Tx-Rx slot configuration is not the same across the device pairs. In addition, there are cellular users transmitting with power levels that compensate for the path loss between them and the base station. This situation creates near-far interference between the users.

There is also an impact of the near-far interferer on the ICI. More specifically, in LTE the in-band emissions in UE transmission that are due to ICI degrade the orthogonality of the inverse fast Fourier transform (iFFT). ICI at the UE transmitter is mainly caused by the phase noise and DL carrier synchronization error. The maximum in-band emission has been specified in 3GPP TS 36.101, v8.1.0, "User Equipment (UE) radio transmission and reception", March 2008, to ensure that there is no significant performance degradation in the eNB receiver performance. The in-band emission is defined as the average across 12 sub-carriers and as a function of the RB offset from the edge of the allocated UL transmission bandwidth. It is measured as the (relative UE output power) of any non-allocated RB(s) and the (total UE output power) of all the allocated RB(s). The basic in-band emissions measurement interval is defined over one slot in the time domain by the formula below:

$$\text{In-band emissions} = \max\left[-25, (20 \cdot \log_{10} EVM) - 3 - 10 \cdot (\Delta_{RB} - 1) / N_{RB})\right].$$

Figure 4 shows that depending on the modulation (QPSK or 16QAM), the iFFT typically allows rejection of inband emissions of about 18 or 21 dB for a small RB offset, respectively, and levelling off at around 25 dB for a larger RB offset. The in-band model used in 3GPP TS 36.101 does not take into account ICI degradation due to the Doppler shift in multi-path propagation.

In D2D the near-far effect, where one interfering UE close to a receiving UE may transmit at a significant higher power than the intended UE source, may aggravate the impact of ICI on in-band emissions in the UE receiver. The difference in Tx power between the interfering UE and the intended UE is mainly due to the path loss, shadowing loss and fast fading, with the first of these being potentially the most dominant factor.

A device pair transmission may also cause significant interference to the eNB, possibly even swamping the eNB receiver. Even if dedicated PRBs are allocated to the device pair, there may possibly be spillage across neighbouring PRBs for cellular access if one device in the pair, close to the eNB, is transmitting to a distant device in the pair. This is illustrated in Figure 5, where D1 and D2 are the devices that form the D2D pair, and D3 is a cellular device (UE) in communication with the base station (eNB). The UL power control as currently specified applies only for the cellular access (D3).

As may be appreciated, a need exists to prevent or mitigate the impact of the near-far interferer as was discussed above.

Discussed now is the impact of cellular transmission on the D2D UE receiver. In a cell-edge situation a cellular UE typically transmits at high power, which is likely to create strong interference to near-by D2D UEs in the receive mode. This is illustrated in Figure 6, where device D1 in making a relative high-power transmission on the UL cellular link to the distant eNB creates strong near-far interference to a nearby device D2 that is in the receive mode on the D2D link, and vice versa. Near-far interference is likely to be worse at the D2D receiver than it is at the eNB receiver. The eNB can limit the maximum D2D transmission power so that interference from a D2D device does not present a problem.

The UL power control for cellular UEs is not, however, intended to limit near-far interference to a D2D receiver from a UE transmitting on the UL cellular link.

A poor SINR may be estimated in the D2D receiver and may then lead to the D2D UE increasing its D2D Tx power within its maximum D2D Tx power limit. The D2D UE and the cellular UE transmission may be separated in time. A need therefore also exists to prevent or mitigate the impact of near-far cellular UE interference to the D2D pair.

With respect to tracking of the near-far interference, a particular D2D pair may report information concerning which resources experience too great of an interference level. Even though the network may utilize fast scheduling of radio resources for both cellular and D2D users, or for only cellular users, it may be possible to track which user or users have been allocated resources upon which a D2D pair experienced too high an interference level in the past (device pair or device cluster). The eNB may subsequently re-assign resources to D2D or cellular devices that are creating high near-far interference. This approach, however, implies that the network maintain history information of past scheduling commands, and thus complicates operations of the resource scheduling function.

In the Tetra system (ETSI TR 102 300-3, v1.2.1 (2002-01), Terrestrial Trunked Radio (TETRA), Part 3: Direct Mode Operation (DMO)), 5 MHz is typically allocated both for the DL and UL in the 380MHz to 400MHz range with TDMA (4 timeslots per frame allowing one or two device Tx / Rx per frame) and a 25 kHz carrier. A guard band of 5MHz in the frequency domain is allocated to separate the DL from the UL bands. The trunked mode (TM) is the primary service, resulting in a limited number of frequencies for the direct mode (DM) device-to-device service.

DM devices in a pair or group detect whether another DM device pair or group located in the same area transmits above the Rx sensitivity level in the same RF carrier. Two independent device-to-device calls may take place on the same RF carrier with timeslot separation by means of an appropriate timing alignment. This allows DM frequency re-use with device pair/groups spatially separated and/or time separated.

DM and TM devices share frequency bands. Their inter-interference in adjacent channels adds to wideband noise transmission from the base station and device transmitters. DM repeaters and the guard band are used to separate the UL from the DL, and spatial orthogonality limits inter-interference between TM and DM transmissions for the TM BS and devices, DM repeaters, and DM devices wherever possible. Otherwise, TM is the primary system which uses the resources and DM the secondary system which only uses the resources if available.

However, in LTE D2D the smaller granularity in the frequency domain (e.g., 6 PRBs in 1 MHz), the loss of iFFT orthogonality due to ICI and the Doppler effect, as well as the lack of a guard band to separate the D2D Tx from Rx, requires a different approach than that used in Tetra.

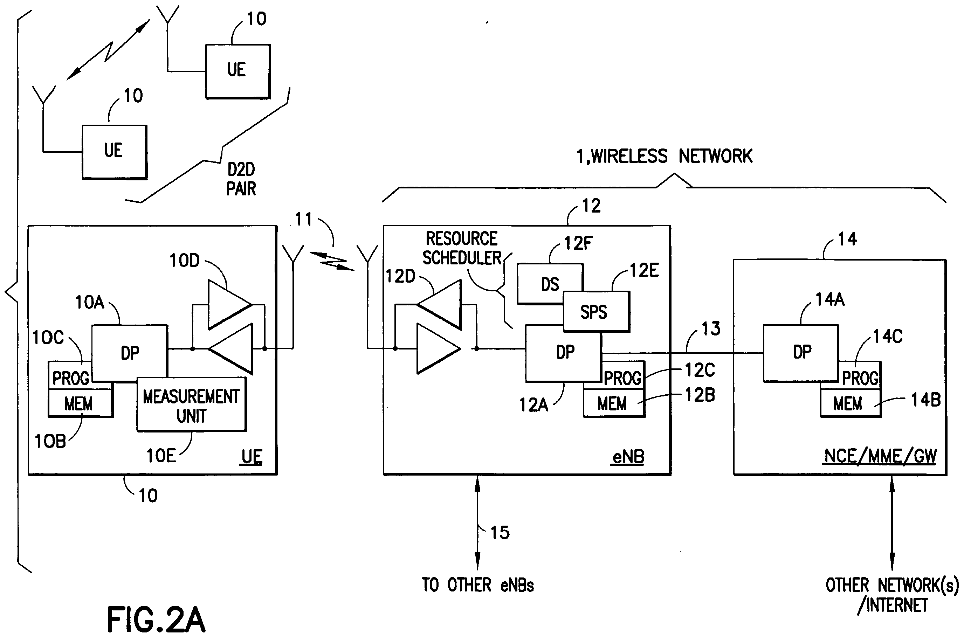

Before describing in further detail the exemplary embodiments of this invention, reference is made to Figure 2A for illustrating a simplified block diagram of various electronic devices and apparatus that are suitable for use in practicing the exemplary embodiments of this invention. In Figure 2A a wireless network 1 is adapted for communication over a wireless link 11 with an apparatus, such as a mobile communication device which may be referred to as a UE 10, via a network access node, such as a Node B (base station), and more specifically an eNB 12. The network 1 may include a network control element (NCE) 14 that may include the MME/SGW functionality shown in Figure 1A, and which provides connectivity with a further network, such as a telephone network and/or a data communications network (e.g., the internet). The UE 10 includes a controller, such as a computer or a data processor (DP) 10A, a computer-readable memory medium embodied as a memory (MEM) 10B that stores a program of computer instructions (PROG) 10C, and a suitable radio frequency (RF) transceiver 10D for bidirectional wireless communications with the eNB 12 via one or more antennas. The eNB 12 also includes a controller, such as a computer or a data processor (DP) 12A, a computer-readable memory medium embodied as a memory (MEM) 12B that stores a program of computer instructions (PROG) 12C, and a suitable RF transceiver 12D for communication with the UE 10 via one or more antennas. The eNB 12 is coupled via a data / control path 13 to the NCE 14. The path 13 may be implemented as the S1 interface shown in Figure 1A. The eNB 12 may also be coupled to another eNB via data / control path 15, which may be implemented as the X2 interface shown in Figure 1A.

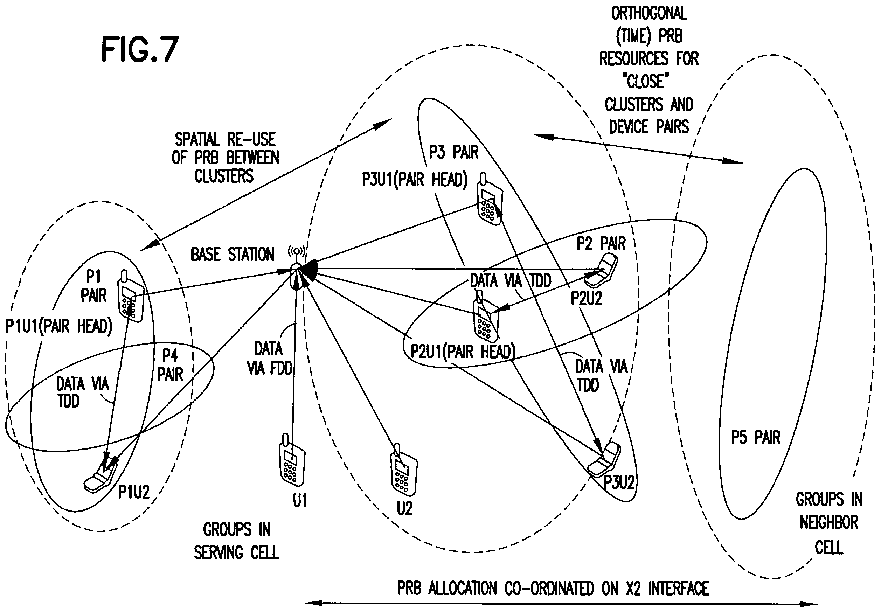

Note that during D2D communications the radio frequency (RF) transceiver 10D (or another RF transceiver) is used for conducting bidirectional wireless communications with another UE 10 using radio resources that lie within the LTE band. While one D2D pair is shown in Figure 2A, it can be appreciated that in practice at any given time there will typically be a plurality of D2D pairs operating within the cell of the eNB 12, as well as in neighboring cells associated with other eNBs. Reference in this regard may also be made to Figure 7, described in detail below.

For the purposes of describing the exemplary embodiments of this invention the UE 10 may be assumed to also include a measurement unit functional block 10E, such as one used to form CQI reported to the eNB 12. The eNB 12 may be assumed to include a resource scheduler comprised of a semi-persistent scheduler (SPS) 12E, and may also include a dynamical scheduler (DS) 12F. The operation of these various units is discussed in further detail below.

At least the PROG 12C is assumed to include program instructions that, when executed by the associated DP, enable the device to operate in accordance with the exemplary embodiments of this invention, as will be discussed below in greater detail. That is, the exemplary embodiments of this invention may be implemented at least in part by computer software executable by the DP 10A of the UE 10 and/or by the DP 12A of the eNB 12, or by hardware, or by a combination of software and hardware (and firmware). Note that the eNB resource scheduler comprised of at least the semi-persistent scheduler 12E may be embodied in whole or in part by at least a portion of the PROG 12C.

In general, the various embodiments of the UE 10 can include, but are not limited to, cellular telephones, personal digital assistants (PDAs) having wireless communication capabilities, portable computers having wireless communication capabilities, image capture devices such as digital cameras having wireless communication capabilities, gaming devices having wireless communication capabilities, music storage and playback appliances having wireless communication capabilities, Internet appliances permitting wireless Internet access and browsing, as well as portable units or terminals that incorporate combinations of such functions.

The computer readable MEMs 10B and 12B may be of any type suitable to the local technical environment and may be implemented using any suitable data storage technology, such as semiconductor based memory devices, flash memory, magnetic memory devices and systems, optical memory devices and systems, fixed memory and removable memory. The DPs 10A and 12A may be of any type suitable to the local technical environment, and may include one or more of general purpose computers, special purpose computers, microprocessors, digital signal processors (DSPs) and processors based on multi-core processor architectures, as non-limiting examples.

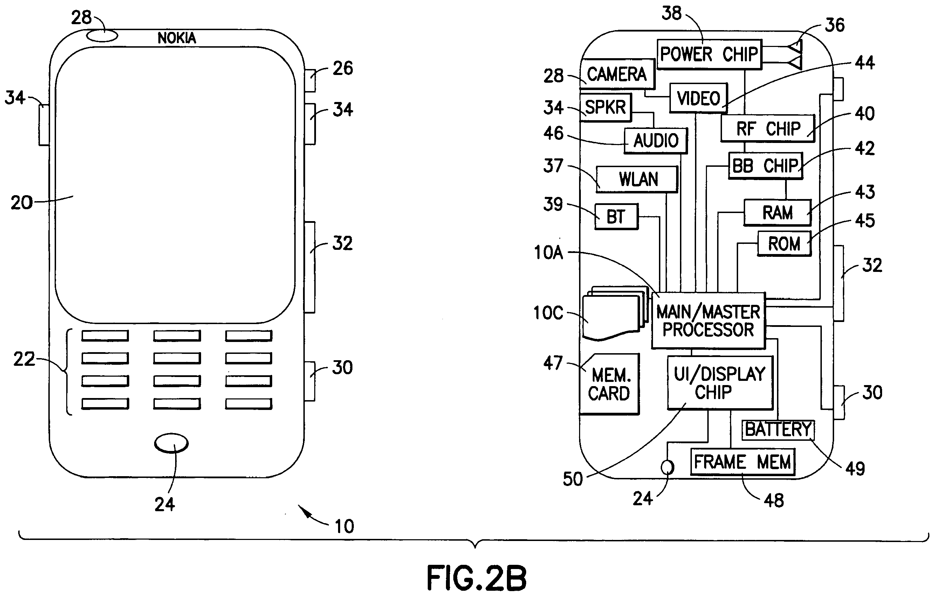

Figure 2B illustrates further detail of an exemplary UE 10 in both plan view (left) and sectional view (right), and the invention may be embodied in one or some combination of those more function specific components. At Figure 2B the UE 10 has a graphical display interface 20 and a user interface 22 illustrated as a keypad but understood as also encompassing touch screen technology at the graphical display interface 20 and voice recognition technology received at the microphone 24. A power actuator 26 controls the device being turned on and off by the user. The exemplary UE 10 may have a camera 28 which is shown as being forward facing (e.g., for video calls) but may alternatively or additionally be rearward facing (e.g., for capturing images and video for local storage). The camera 28 is controlled by a shutter actuator 30 and optionally by a zoom actuator 30 which may alternatively function as a volume adjustment for the speaker(s) 34 when the camera 28 is not in an active mode.

Within the sectional view of Figure 2B are seen multiple transmit/receive antennas 36 that are typically used for cellular communication. The antennas 36 may be multi-band for use with other radios in the UE. The operable ground plane for the antennas 36 is shown by shading as spanning the entire space enclosed by the UE housing though in some embodiments the ground plane may be limited to a smaller area, such as disposed on a printed wiring board on which the power chip 38 is formed. The power chip 38 controls power amplification on the channels being transmitted and/or across the antennas that transmit simultaneously where spatial diversity is used, and amplifies the received signals. The power chip 38 outputs the amplified received signal to the radio frequency (RF) chip 40 which demodulates and downconverts the signal for baseband processing. The baseband (BB) chip 42 detects the signal which is then converted to a bit stream and finally decoded. Similar processing occurs in reverse for signals generated in the apparatus 10 and transmitted from it.

Signals going to and from the camera 28 may pass through an image/video processor 44 that encodes and decodes the various image frames. A separate audio processor 46 may also be present controlling signals to and from the speakers 34 and the microphone 24. The graphical display interface 20 is refreshed from a frame memory 48 as controlled by a user interface chip 50 which may process signals to and from the display interface 20 and/or additionally process user inputs from the keypad 22 and elsewhere.

Certain embodiments of the UE 10 may also include one or more secondary radios such as a wireless local area network radio WLAN 37 and a Bluetooth7 radio 39, which may incorporate an antenna on the chip or be coupled to an antenna off the chip. Throughout the apparatus are various memories such as random access memory RAM 43, read only memory ROM 45, and in certain embodiments of this invention, removable memory such as the illustrated memory card 47 on which the various programs 10C are stored. All of these components within the UE 10 are normally powered by a portable power supply such as a battery 49.

The processors 38, 40, 42, 44, 46, 50, if embodied as separate entities in a UE 10 or eNB 12, may operate in a slave relationship to the main processor 10A, 12A, which may then be in a master relationship to them. Embodiments of this invention may be disposed across various chips and memories as shown, or disposed within another processor that combines some of the functions described above for Figure 2B. Any or all of these various processors of Figure 2B access one or more of the various memories, which may be on-chip with the processor or separate there from. Similar function-specific components that are directed toward communications over a network broader than a piconet (e.g., components 36, 38, 40, 42-45 and 47) may also be disposed in exemplary embodiments of the access node 12, which may have an array of tower mounted antennas rather than the two shown at Figure 2B.

Note that the various integrated circuits (e.g., chips 38, 40, 42, etc.) that were described above may be combined into a fewer number than described and, in a most compact case, may all be embodied physically within a single chip.

In the exemplary embodiments of this invention time-hopping (TH) of D2D resources within a cell and across cells is performed to randomize near-far interference from nearby transmitting D2D UEs 10 and cellular UEs 10.

It is pointed out that, in general, there is no (near-far) interference within a spatial group, as device-to-device transmissions are time domain multiplex, i.e., one device pair at a time is allocated a slot, and within that slot one device in the pair is transmitting.

The eNB 12 applies random sequence offsets at regular time intervals, T, to semi-persistent scheduled resources with the same time periodicity to prevent one pair from excessively suffering from eNB-unaware near-far interference by another pair for a time duration exceeding T. The random sequence offset used in time-hopping of resources allocated to device pairs/groups may be based on device pair/group location. The random sequence offset used in time-hopping of resources allocated to device pairs/groups may be changed on a relatively short term basis for D2D devices within the same cell and also for D2D devices spatially separated from other D2D devices in neighbouring cells. The random sequence offset used in time-hopping of resources allocated to device pairs/groups may be changed on a relatively long term basis for D2D devices not spatially separated from other D2D devices in neighbouring cells, which implies the presence of eNB 12 coordination on the X2 interface (shown in Figure 1A), with a latency of at least 20 ms assumed.

The random sequence offsets that are used may be based on, as non-limiting examples, pseudo-noise (PN) sequences, m-sequences, or Gold codes or sequences.

For example, an m-sequence (maximum length sequence (MLS)) is a type of pseudorandom binary sequence. M-sequences are polynomial rings generated using maximal linear feedback shift registers. They are periodic and reproduce every binary sequence that can be reproduced by the shift registers (i.e., for length-m registers they produce a sequence of length $2^m$-1).

A Gold code is a type of a binary sequence based on two selected maximum length sequences of the same length $2^m - 1$, where their cross-correlation takes only three values. The set of the $2^m - 1$ exclusive-ors of the two sequences in their various phases (i.e., translated into all relative positions), together with the two original sequences themselves, is a set of Gold codes. A set of Gold code sequences consists of $2^m + 1$ sequences each one with a period of $2^m - 1$.See, for example, Gold, R. (1967), "Optimal binary sequences for spread spectrum multiplexing (Corresp.)", IEEE Transactions on Information Theory, 13 (4), pp.619-621.

As was noted above, the exemplary embodiments of this invention may be used with any suitable technique/algorithm/hardware/means for generating the random or pseudo-random sequence offsets.

In the exemplary embodiments of this invention a D2D CQI based on a SINR measurement at the UE 10 receiver may be reported by a device pair head (master) or slave to the eNB 12 in case either experience a poor SINR due to a strong near-far interferer(s). This provides a fall-back mechanism, as eNB 12 randomisation of D2D near-far interference is subject to practical limitations, for example, delays due to X2 interface latency, imperfect time-hopping, spatial orthogonality degradation due to line of sight (LOS) in an elevated device position, ICI degradation (higher in-band emissions) due to D2D device transmission time misalignment, and so on. The reporting of the D2D CQI may also be used to count a number of TH collisions, where a timeslot is marked as a collision when a device reports excessive near-far interference. If the number of collisions within a sliding collision window length (expressed as a multiple of slot durations) exceeds a TH collision threshold, the eNB may assign different TH sequences or random offsets across cells within the serving cells, and coordinate the TH with other eNBs 12 over the X2 interface.

In the exemplary embodiments of this invention power settings from UL power control in wireless access may override device D1 transmission power to device D2 in a case where D1 is closer to the eNB 12 than to D2, as is illustrated in Figure 5. That is, the maximum D2D power is (less than) D1 power needed to transmit to the eNB 12 based on the UL power control (PC), and may result in some D2D link loss. This exemplary embodiment prevents a device pair transmission from swamping the eNB 12 receiver in an adjacent UL frequency sub-band due to ICI (in-band emissions).

Discussed now in greater detail is the time-hopping of D2D resources with spatial and frequency orthogonality.

In the exemplary embodiments of this invention the eNB 12 combines time-hopping with spatial and frequency allocation of D2D resources to the device pairs or device groups to randomise near-far interference. Spatial and time orthogonality for device pairs/groups are illustrated in Figure 7. Spatial reuse can be applied to distant pairs (e.g., P1 and P2/P3). Nearby pairs (e.g., P2 and P3) are allocated orthogonal resources in the time/frequency domain. Coordination of orthogonal resource allocation for groups located in different (neighbour) cells (e.g., P2/P3 and P5), as opposed to those located in a serving cell, can be accomplished via the X2 interface between eNBs 12. The interference due to the near-far problem is alleviated because of the PRB orthogonality and the short distances between devices within the group.

The use of the dynamical scheduler (DS) 12F implicitly provides some randomness due to the lack of periodicity in such resource allocations by the eNB 12. Dynamical scheduling may be used to allocate resources to device pairs that are suffering from excessive interference that is not removed by TH of semi-persistently scheduled resources, or when the semi-persistent scheduler (SPS) 12E cannot allocate resources to a given device pair. The dynamical scheduler 12F may use D2D CQI measurements based on the SINR measured over the D2D link and reported to the eNB 12 by the device pair head (master) and/or the slave. The D2D CQI may be based on SINR measured at the device receiver. It is also within the scope of the exemplary embodiments for the D2D CQI for each D2D link to be reported to aid the eNB 12 in identifying the D2D link associated with high interference. To limit the impact on the signaling, such D2D-link-based CQI may only be reported by active pairs suffering from a high level of interference. For example, N=100 active D2D devices in the cell gives Nc2=100c2=4950 D2D links, a 50 fold increase in CQI signaling as compared to cellular access. If only three active D2D devices suffer from high interference, only 3*99=297 links, and possibly fewer in practise, need be used if only stronger links are considered.

In an exemplary and non-limiting embodiment of the invention the eNB 12 uses the SPS 12E to schedule UL grant resources to a cluster head and slaves using a common D2D RNTI with a periodicity of the UL grant sfx (x=10, 20,..., 120 in subframes). The clusters are formed by the eNB SPS 12E based on a maximum D2D Tx power and a geographical location estimate of the devices (e.g., one based on a timing advance (TA) parameter (which is indicative of a range or distance from the eNB 12 to a particular UE 10) and direction of arrival (DoA)). The UL grant resources allocated to a cluster aim to minimize inter-cluster interference by spatial orthogonality (TA and DoA), time orthogonality (subframe separated), and if spatial and time orthogonality are not readily achievable, frequency orthogonality (PRB separated). Note that frequency orthogonality cannot in itself deal effectively with the near-far interference typically experienced in D2D communication (due at least in part to limited FFT interference rejection of adjacent PRBs from another UE 10 Tx at the receiver).

Other location determining procedures may be employed by the eNB 12 (i.e., other than TA and DoA), such as the use of triangulation and/or the use of global positioning system coordinates received from the UEs 10, as well as any other suitable techniques.

Consider that the devices pairs $P_1$, $P_2$, $P_3$, $P_4$ and $P_5$ in Figure 7 are allocated TH sequence $S_1$, $S_2$, $S_3$, $S_4$, and $S_5$, respectively, where $t_i$, i=1, 2, .., $t_n$, ... indicate the timeslot index for a device pair. That is, one device in the pair is in Tx mode and the other device is in Rx mode at timeslot index i. Consider further a simple random TH offset for device pair resources within a same geographical area (i.e., not spatially separated). Denote the spatial group including device pairs {$P_1$ and $P_4$ by $G_1$, and {$P_2$, $P_3$, $P_5$} by $G_2$. Note that $G_2$ encompasses device pairs in neighbouring cells, but which are spatially close in this non-limiting example.

Consider further three timeslot index sequences of length N derived from sequence {1, 2, 3, .., N} as follows:

$$t_{j,1}=N*\{1, 2, 3, .., N\} = N, 2*N, 3*N, ....., N^2$$

$$t_{j,2}= t_{j,1}-1=N*\{1, 2, 3, .., N\}-1 = N-1, 2*N-1, …, N^2-1$$

$$t_{j,3}= t_{j,2}-1= N*\{1, 2, 3, .., N\}-2 = N-2, 2*N-2, …, N^2-2,$$

where j is the TH timeslot index expressed as a multiple on N timeslots, e.g., N=3 gives timeslot index sequences $t_{1,1}$ = {3, 6, 9}, $t_{1,2}$={2, 5, 8}, $t_{1,2}$={1,4,7}, which in turn allocates timeslots {$t_3$, $t_6$, $t_9$}, {$t_2$, $t_5$, $t_8$}, and {$t_1$, $t_4$, $t_7$} to devices $P_2$, $P_3$, and $P_5$ in the first term of sequence $S_2$, $S_3$, and $S_5$, respectively (highlighted in bold below). Further, as shown in the example, the timeslot index sequences are allocated with $N^2 = 9$ timeslot periodicity. Hence, there is assigned $t_{j,1}$, $t_{j,2}$, and $t_{j,3}$ to device pairs $P_1$, $P_2$, $P_3$, $P_4$, and $P_5$ with a random TH offset to define TH sequences $S_1$, $S_2$, $S_3$, $S_4$, and $S_5$ respectively as follows:

$$S_1 = \{t_{1,2}, t_{2,3}, t_{3,1}, t_{4,2}, t_{5,3}, t_{6,2}, ..., \} = \{t_2, t_5, t_8, t_{10}, t_{13}, t_{16}, t_{21}, t_{24}, t_{27}, ..., \}$$

$$S_4 = \{t_{1,1}, t_{2,2}, t_{3,2}, t_{4,3}, t_{5,2}, t_{6,1}, ..., \} = \{t_3, t_6, t_9, t_{11}, t_{14}, t_{17}, t_{20}, t_{23}, t_{26}, ..., \}$$

$$S_2 = \{\mathbf{t_{1,3}}, t_{2,1}, t_{3,2}, t_{4,1}, t_{5,3}, t_{6,1}, ..., \} = \{\mathbf{t_1, t_4, t_7}, t_{12}, t_{15}, t_{18}, t_{20}, t_{23}, t_{26}, ..., \}$$

$$S_3 = \{\mathbf{t_{1,1}}, t_{2,3}, t_{3,1}, t_{4,2}, t_{5,1}, t_{6,3}, ..., \} = \{\mathbf{t_3, t_6, t_9}, t_{10}, t_{13}, t_{17}, t_{21}, t_{24}, t_{27}, ..., \}$$

$$S_5 = \{\mathbf{t_{1,2}, t_{2,2}, t_{3,3}, t_{4,3}, t_{5,2}, t_{6,2}}, ..., \} = \{\mathbf{t_2, t_5, t_8}, t_{11}, t_{14}, t_{17}, t_{19}, t_{22}, t_{25}, ..., \}$$

Note that the same TH timeslot index sequence, $t_{j,i}$, may not be used by more than one device pair within the same spatial group to prevent intra-near-far interference. Compare this set of sequences using random TH offset to the following sequence set without such TH:

$$S_1' = \{t_{1,1}, t_{2,1}, t_{3,1}, t_{4,1}, t_{5,1}, t_{6,1}, ..., \} = \{t_3, t_6, t_9, t_{12}, t_{15}, t_{18}, t_{21}, t_{24}, t_{27}, ..., \}$$

$$S_4' = \{t_{1,2}, t_{2,2}, t_{3,2}, t_{4,2}, t_{5,2}, t_{6,2}, ..., \} = \{t_2, t_5, t_8, t_{11}, t_{14}, t_{17}, t_{20}, t_{23}, t_{26}, ..., \}$$

$$S_2' = \{t_{1,2}, t_{2,2}, t_{3,2}, t_{4,2}, t_{5,2}, t_{6,2}, ..., \} = \{t_2, t_5, t_8, t_{11}, t_{14}, t_{17}, t_{20}, t_{23}, t_{26}, ..., \}$$

$$S_3' = \{t_{1,1}, t_{2,1}, t_{3,1}, t_{4,1}, t_{5,1}, t_{6,1}, ..., \} = \{t_3, t_6, t_9, t_{12}, t_{15}, t_{18}, t_{21}, t_{24}, t_{27}, ..., \}$$

$$S_5' = \{t_{1,3}, t_{2,3}, t_{3,3}, t_{4,3}, t_{5,3}, t_{6,3}, ..., \} = \{t_1, t_4, t_7, t_{10}, t_{13}, t_{16}, t_{19}, t_{22}, t_{25}, ..., \}.$$

$S_1'$, $S_2'$, $S_3'$, $S_4'$, and $S_5'$ can readily be scheduled by the SPS 12E. Note that the SPS 12E allocates UL grants every sfx subframes, with sfx specified in 3GPP 36.331 as a multiple of 10, and in the non-limiting example is has been assumed that sfx is expressed as a number of subframes. Hence, device pairs $P_1$, $P_2$, $P_3$, $P_4$, and $P_5$ are allocated UL grants by the SPS 12E every sfx=3 subframes (in this non-limiting example). Further, consider a case where transmitting devices in device pairs $P_4$ in spatial group $G_1$ may cause strong interference to a receiving device in device pairs $P_2$ in spatial group $G_2$. This may be the case when there is no effective spatial orthogonality between $P_4$ and $P_2$, possibly due to devices in $P_4$ being in an elevated position or having a direct LOS to the devices in $P_2$. In this example, and without TH, device pair $P_4$ are allocated UL grants by SPS on the same time slots as device pair $P_2$ and will cause interference on all of the timeslots.

With the use of TH only a few of the timeslots allocated to device pair $P_2$ will suffer from such interference from device pair $P_4$.

Interference without TH (interfering timeslots are indicated in bold):

$$S_4' = \{t_{1,2}, t_{2,2}, t_{3,2}, t_{4,2}, t_{5,2}, t_{6,2}, ..., \} = \{t_2, t_5, t_8, t_{11}, t_{14}, t_{17}, t_{20}, t_{23}, t_{26}, ..., \}$$

$$S_2' = \{\mathbf{t_{1,2}, t_{2,2}, t_{3,2}, t_{4,2}, t_{5,2}, t_{6,2}}, ..., \} = \{\mathbf{t_2, t_5, t_8, t_{11}, t_{14}, t_{17}, t_{20}, t_{23}, t_{26}}, ..., \}.$$

Interference with TH (interfering timeslots are again indicated in bold):

$$S_4 = \{t_{1,1}, t_{2,2}, t_{3,2}, t_{4,3}, t_{5,2}, t_{6,1}, \ldots, \} = \{t_3, t_6, t_9, t_{11}, t_{14}, t_{17}, t_{20}, t_{23}, t_{26}, \ldots, \}$$

$$S_2 = \{t_{1,3}, t_{2,1}, \mathbf{t_{3,2}}, t_{4,1}, t_{5,3}, \mathbf{t_{6,1}}, \ldots, \} = \{t_1, t_4, t_7, t_{12}, t_{15}, t_{18}, \mathbf{t_{20}, t_{23}, t_{26}}, \ldots, \}.$$

A dramatic reduction in the number of interfering timeslots can thus be achieved through the use of TH in accordance with the exemplary embodiments of this invention.

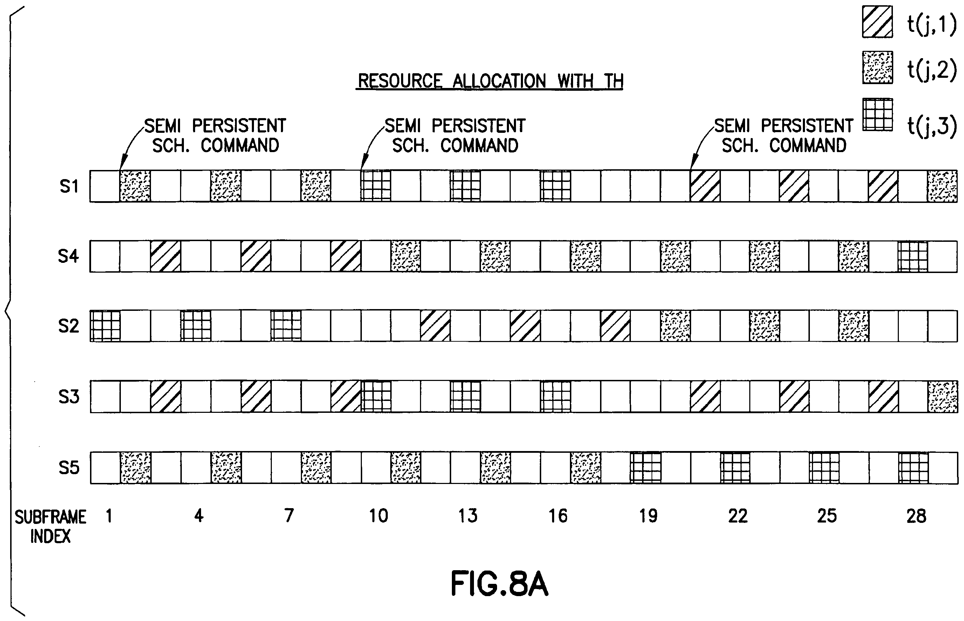

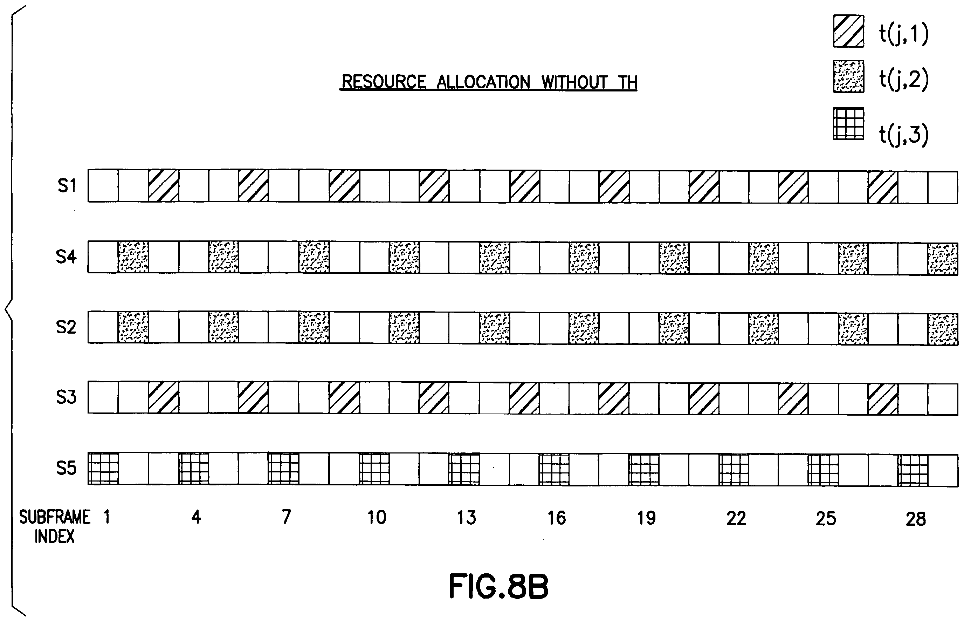

The near-far interference with and without TH for this example is illustrated in Figure 8.

Statistically, it can be shown in the example that the random TH offset with $N_{TH}$ TH sequences allocated to spatially separated groups with $N <= N_{TH}$ device pairs has a timeslot collision probability of :

$$P_{collision} = N_I /( N_{TH}{*}N) \text{ if } N_I <= (N_{TH}{*}N) \text{ ; 1 otherwise,}$$

where $N_I$ is the number of device pairs in one spatial group interfering with other device pairs in another spatial group. In a case where there are $N_I$ device pairs interfering with the N device pairs in the group (i.e., $N_I=N$), the use of TH still reduces the collision probability to $1/N_{TH}$. In a case where $N_I$ is greater than N, the collision probability tends to 1 as $N_I$ tends to $N{*}N_{TH}$. In the example, and depending on the value of NI, one can observe the following:

- $N_{I=1}$, $P_{collision}$ = 1/(3*3)=1/9 in spatial group $G_2$ or 1/(3*2=1/6 in spatial group $G_1$.
- $N_I=2$, $P_{collision}$ = 2/(3*3)=2/9 in spatial group $G_2$ or 2/(3*2=2/6 in spatial group $G_1$.
- $N_I=3$, $P_{collision}$ = 3/(3*3)=3/9 in spatial group $G_2$ or 3/(3*2=3/6 in spatial group $G_1$.
- $N_I=6$, $P_{collision}$ = 6/(3*3)=6/9 in spatial group $G_2$ or 6/(3*2=6/6=1 in spatial group $G_1$.
- $N_I=9$, $P_{collision}$ = 9/(3*3)=1 in spatial group $G_2$ or 1 (since $N_I=N_{TH}{*}N$) in spatial group $G_1$.

$N_I=6$ means that there are three times as many interfering device pairs from other groups than there are device pairs in spatial group $G_1$, all using the same timeslot index sequence $t_{j,1}$, $t_{j,2}$, and $t_{j,3}$. Time-hopping with these three timeslot index sequences will not, on average, be sufficient to remove collision on any timeslots for device pairs $P_1$ and $P_4$. Likewise, $N_I=9$ means there are three times as many interfering device pairs from other groups than there are device pairs in spatial group $G_2$, all using the same timeslot index sequence $t_{j,1}$, $t_{j,2}$, and $t_{j,3}$. Time-hopping with these three timeslot index sequences will not, on average, be sufficient to remove collision on any timeslots for device pairs $P_2$, $P_3$, and $P_5$.

In a case where there is perfect spatial orthogonality between spatial device groups $G_1$ and $G_2$ (i.e., $N_I=0$) the collision probability becomes zero. Without time-hopping, however, $P_{collision}=N_I/N$. Hence, the use of TH reduces interference by a factor $(N_{TH}-1)/N_{TH}$. In the foregoing non-limiting example, with $N_I=1$, this yields $P_{collision}$ of 1/3 and 1/2 for spatial groups $G_1$ and $G_2$, respectively, and a (3-1)/3=2/3 (or 66%) reduction in interference.

In a case where only one device in the device pair is causing interference, $P_{collision}$ is reduced by half, that is:

$$P_{collision} = N_I /(N_{TH}{*}2{*}N) \text{ if } N_I <= (N_{TH}{*}2{*}N) \text{ ; 1 otherwise.}$$

Hence, in the example with $N_I=1$, $P_{collision}$ = 1/(3*2*3)=1/18 in spatial group $G_2$ or 1/(3*2*2)=1/12 in spatial group $G_1$. One can thus observe a (3-1)/3=2/3 (or 66%) reduction in interference.

The foregoing non-limiting example has assumed that the SPS periodicity, Sfx, is not a multiple of 10, but is simply a normal number for convenience. So, sfx=3 in fact means sfx=30. This implies then that there are up to 30^2=900 timeslots that may be used with 30 TH sequences. Of course, in a typical implementation all of these timeslots do not have to be used, instead it is sufficient to select a subset in the available TH sequences at each TH period. Assume as a non-limiting example the presence of a spatial group with N <= 10 device pairs and, thus, $N_{TH}$ may be » N. In this case near-far interferers may be shuffled about quite well in order to minimize and/or randomize interference.

The sfx minimum periodicity of ten subframes is specified in 3GPP TS 36.331. The semi-persistent allocation of UL grants may be terminated by a PDCCH command during a semi-persistently scheduled subframe. Likewise, new semi-persistent UL grants are indicated by a PDCCH command in accordance with 3GPP TS 36.321. TH hopping in a spatial group may be simply accomplished by:

(i) PDCCH de-activation of the SPS on the last subframe in the TH period (last timeslot index in the TH timeslot index) to clear the semi-persistent configured uplink grant; and

(ii) PDCCH activation of the SPS on the first subframe in the TH period (first timeslot index in the TH timeslot index) to semi-persistently configure the new uplink grant with periodicity as indicated by sfx.

A processing delay of three subframes may be assumed to allow the processing of the received PDCCH in the UE 10. This processing delay applies to all the device pairs. Hence there is no impact on UL grants for the device pairs due to the use of TH.

The spatial re-use of D2D resources implies that device pairs in different spatial groups may be allocated the same resources by the SPS 12E via PDCCH command, where several PDCCH commands may allocate the same UL grants to spatially separated device pairs. This can be accomplished by the SPS 12E as specified in 3GPP TS 36.321.

Another technique includes a D2D-RNTI in a single PDCCH command, where the D2D-RNTI is shared by the spatially separated device pairs. This may be specified to allow one or several device pairs to interpret the same PDCCH command to start the SPS and share the same UL grants. TH across neighbour cells may be accomplished by coordination of random TH offsets applied to TH sequences allocated to spatial groups via the X2 interface between the eNBs 12. While 20 ms latency over the X2 interface may be assumed to typically apply, this latency is not considered to be a significant issue for the use of TH in accordance with the exemplary embodiments of this invention.

Two devices in a pair may share an UL grant as given by the SPS 12E via a PDCCH command, including D2D-RNTI. In another exemplary embodiment of the invention, the pair device head only may interpret the PDCCH and then configure the other (slave) device in the D2D pair to share the UL grant on the D2D link. The pair head may also configure the Tx-Rx mode for the slave.

Discussed now is a limit of D2D transmission power using UL power control (PC) power settings. In an exemplary embodiment of this invention power settings from the UL PC in wireless access as specified in 3GPP TS 36.213 may be used to override D2D transmission power. This may be accomplished in at least two ways.

(i) In a first approach the physical uplink shared channel (PUSCH) transmission power settings sent by the eNB 12 to the UE 10 are used to cap (upper limit) the D2D transmission power. This approach implies that the D2D device is also transmitting the PUSCH on the UL using cellular access.
(ii) In a second approach the physical uplink control channel (PUCCH) transmission power settings sent by the eNB to the UE 10 are used to cap (upper limit) the D2D transmission power. This approach implies that the D2D device is also transmitting the PUCCH on the UL using cellular access.

The eNB 12 may give the UL grant for the PUSCH or the PUCCH by using a PDCCH command while the D2D UE 10 is in a RRC_CONNECTED state in cellular access. The eNB 12 can have knowledge of when a device attached to the eNB 12 needs to transmit to another device on the D2D link during initial D2D link setup. This technique prevents a device pair transmission from swamping the eNB 12 receiver in an adjacent UL frequency sub-band due to ICI (in-band emissions).

Discussed now is a fall back mechanism that can be used in a case where eNB 12 randomization of the D2D near-far interference fails. A D2D device suffering from poor SINR may transmit at a power less than or equal to the allowed maximum power corresponding to the UL power settings. In practice, the power headroom (PH) specified in 3GPP 36.213 based on the maximum UL transmission power and the UL power settings may be greater than the minimum PH, assuming that maximum UL transmission power can be used for the D2D pair. However, the power settings are based on the path loss and other parameters to avoid excessive power in the eNB 12 receiver. The eNB 12 cannot reduce the power settings to increase the PH, as this would imply the presence of more interfering power in the eNB 12 receiver. Hence, limiting the D2D transmission power to the power level as given by the power settings means that D2D transmission power may not be sufficient to maximize D2D link efficiency between the devices in the pair. In some scenarios the loss may be significant.

Reference with regard to the power headroom described in 3GPP TS 36.213 may be made to sub-clause 5.1.1.2. The UE power headroom $PH$ valid for subframe $i$ is defined by:

$$PH\ (i) = P_{\mathrm{MAX}} - \left\{ 10\log_{10}(M_{\mathrm{PUSCH}}(i)) + P_{\mathrm{O\_PUSCH}}(j) + \alpha \cdot PL + \Delta_{\mathrm{TF}}(i) + f(i) \right\}$$

[dB]

where, $P_{\mathrm{MAX}}$, $M_{\mathrm{PUSCH}}(i)$, $P_{\mathrm{O\_PUSCH}}(j)$, $\alpha$, $PL$, $\Delta_{\mathrm{TF}}(i)$ and $f(i)$ are defined in sub-clause 5.1.1.1. The power headroom is to be rounded to the closest value in the range [40; -23] dB with steps of 1 dB, and is delivered by the physical layer to higher layers.

One exemplary fall back mechanism from D2D access to cellular access via the eNB 12 may be used to allow the two devices in the D2D pair to continue communication with one another. The devices in the pair first establish between themselves that they need to switch to cellular access based on poor D2D link measurements, e.g., based on one or more of a high NACK rate and a poor measured SINR, as two non-limiting criteria. The eNB 12 may then schedule DL and UL grants by PDCCH to allow a call between the two devices in the D2D pair to take place.

The pair head and/or slave device may then contact the eNB 12 directly to set up the RRC context for the cellular call, i.e., to set up the radio bearer configuration. If a cluster head is used for D2D resource allocation, the pair head may contact the cluster head to release the D2D resources, or indicate via a buffer status request (BSR) from the cluster head that the cluster head and the slave device have no more data to transmit on the D2D link. If no cluster head is used, the eNB 12 may release D2D resources allocated to the device pair once it has allocated cellular resources for the pair. In either case, seamless switching from the D2D link to the cellular link may be achieved.

As should be appreciated in view of the foregoing description, the use of the exemplary embodiments of this invention provides a number of advantages and technical effects.

For example, using time-hopping of D2D resources within a cell and across cells randomizes near-far interference from nearby transmitting D2D UEs 10, and also nearby transmitting cellular UEs 10, and thus efficiently reduces problematic near-far interference in D2D communications.

Further by example, the use of these exemplary embodiments provides a practical technical implementation with no significant impact on standardization of the SPS 12E, if spatial re-use of D2D resources is not assumed.

Further by example, the use of these exemplary embodiments limits the impact on the standardization, as SPS tools may be re-used. A more optimum control signaling solution for D2D TH, with spatial orthogonality, is made possible with but a limited impact on standardization.

Further by example, the use of these exemplary embodiments does not have an impact on CQI signaling overhead, as it need not be not used for TH.

It is pointed out that while the TH used for near-far interference mitigation for D2D pairs has been described thus far in the context of the UL sub-band, the TH techniques explained above may be used as well for near-far interference mitigation for D2D pairs using a DL sub-band.

Based on the foregoing it should be apparent that the exemplary embodiments of this invention provide a method, apparatus and computer program(s) to provide a mitigation of interference generated by D2D pairs, where the D2D pairs may transmit using a dedicated UL sub-band or in a dedicated DL sub-band. Time-hopping is used to randomize interference between D2D pairs, where the time-hopping is applied to semi-persistently allocated D2D resources, and where time-hopping sequences are coordinated amongst D2D pairs that are spatially separated. Time-hopping is coordinated by the base station (e.g., by the eNB 12, such as by the resource scheduler functionality) across spatially orthogonal groups of D2D devices. With regard to power control, the base station may not allow a particular D2D device to transmit to another D2D device at a significantly higher power level than it would if it were transmitting to the base station, thereby preventing excessive in-band emission at the base station receiver that may leak into an adjacent sub-band used for non-D2D terminals, such as cellular terminals.

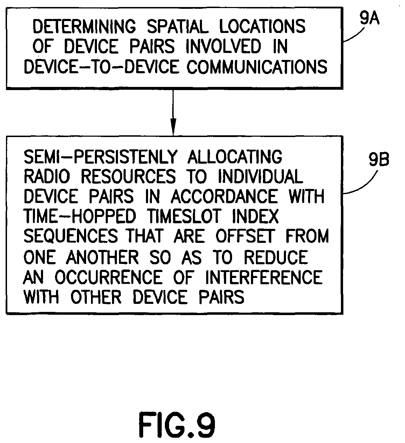

Figure 9 is a logic flow diagram that illustrates the operation of a method, and a result of execution of computer program instructions, in accordance with the exemplary embodiments of this invention. In accordance with these exemplary embodiments a method performs, at Block 9A, a step of determining spatial locations of device pairs involved in device-to-device communications; and at Block 9B a step of semi-persistently allocating radio resources to individual device pairs in accordance with time-hopped timeslot index sequences that are offset from one another so as to reduce an occurrence of interference with other device pairs.

The operation of the method, and the result of execution of the computer program instructions, in accordance with the exemplary embodiments of this invention may further comprise grouping together device pairs involved in device-to-device communications into a spatial group, and semi-persistently allocating radio resources operates to allocate radio resources to individual device pairs of a particular spatial group in accordance with the time-hopped timeslot index sequences that are offset from one another so as to reduce an occurrence of interference with other spatial groups.

The various blocks shown in Figure 9 may be viewed as method steps, and/or as operations that result from operation of computer program code stored in or on a memory, such as the program code 12C stored in the memory 12B, and/or as a plurality of coupled logic circuit elements constructed to carry out the associated function(s), such as logic circuits/program code that embody the SPS 12E shown in Figure 2A.

The exemplary embodiments of this invention also encompass an apparatus that comprises means for determining spatial locations of device pairs involved in device-to-device communications; means for grouping together device pairs involved in device-to-device communications into spatial groups; and means for semi-persistently allocating radio resources to individual device pairs in a particular spatial group in accordance with time-hopped timeslot index sequences that are randomly or pseudo-randomly offset from one another so as to reduce an occurrence of interference with device pairs of another spatial group. These various means may be embodied as circuitry, including one or more computing devices, and/or program code executable by the one or more computing devices. These various means may form a part of the radio resource scheduler functionality of the base station, such as the eNB 12, or they may be separate there from. These various means may also be considered in some exemplary embodiments to be distributed across a plurality of base stations, and communicatively coupled together through appropriate

interfaces, such as the X2 interfaces between the eNBs.

It should be realized that while the concept of a D2D "group" or "cluster" has been discussed above, as considered herein a D2D group or cluster may contain only a single D2D pair. As such, these exemplary embodiments of the invention also encompass determining spatial locations of device pairs involved in device-to-device communications, and semi-persistently allocating uplink and/or downlink resources to individual device pairs in accordance with time-hopped timeslot index sequences that are offset from one another so as to reduce an occurrence of interference with one or more other device pairs.

In general, the various exemplary embodiments may be implemented in hardware or special purpose circuits, software, logic or any combination thereof. For example, some aspects may be implemented in hardware, while other aspects may be implemented in firmware or software which may be executed by a controller, microprocessor or other computing device, although the invention is not limited thereto. While various aspects of the exemplary embodiments of this invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

It should thus be appreciated that at least some aspects of the exemplary embodiments of the inventions may be practiced in various components such as integrated circuit chips and modules, and that the exemplary embodiments of this invention may be realized in an apparatus that is embodied as an integrated circuit. The integrated circuit, or circuits, may comprise circuitry (as well as possibly firmware) for embodying at least one or more of a data processor or data processors, a digital signal processor or processors, baseband circuitry and radio frequency circuitry that are configurable so as to operate in accordance with the exemplary embodiments of this invention.

Various modifications and adaptations to the foregoing exemplary embodiments of this invention may become apparent to those skilled in the relevant arts in view of the foregoing description, when read in conjunction with the accompanying drawings. However, any and all modifications will still fall within the scope of the non-limiting and exemplary embodiments of this invention.

For example, while the exemplary embodiments have been described above in the context of the EUTRAN (UTRAN-LTE) system and the LTE-A system, it should be appreciated that the exemplary embodiments of this invention are not limited for use with only these particular types of

wireless communication system, and that they may be used to advantage in other presently specified or future wireless communication systems.

It should be noted that the terms "connected," "coupled," or any variant thereof, mean any connection or coupling, either direct or indirect, between two or more elements, and may encompass the presence of one or more intermediate elements between two elements that are "connected" or "coupled" together. The coupling or connection between the elements can be physical, logical, or a combination thereof. As employed herein two elements may be considered to be "connected" or "coupled" together by the use of one or more wires, cables and/or printed electrical connections, as well as by the use of electromagnetic energy, such as electromagnetic energy having wavelengths in the radio frequency region, the microwave region and the optical (both visible and invisible) region, as several non-limiting and non-exhaustive examples.

Further, the various names used for the described parameters are not intended to be limiting in any respect, as these parameters may be identified by any suitable names. Further, the formulas and expressions that use these various parameters may differ from those expressly disclosed herein. Further, the various names assigned to different channels (e.g., PDCCH, PUCCH, PUSCH) are not intended to be limiting in any respect, as these various channels may be identified by any suitable names.

Furthermore, some of the features of the various non-limiting and exemplary embodiments of this invention may be used to advantage without the corresponding use of other features. As such, the foregoing description should be considered as merely illustrative of the principles, teachings and exemplary embodiments of this invention, and not in limitation thereof.

**Claims**

1.  A method, comprising:

determining (9A) spatial locations of device (10) pairs involved in device-to-device communications; and **characterized by**:

semi-persistently allocating (9B) radio resources to individual device (10) pairs in accordance with time-hopped timeslot index sequences that are offset from one another so as to reduce an occurrence of interference with other device (10) pairs.

2. The method of claim 1, further comprising grouping together device (10) pairs involved in device-to-device communications into a spatial group, where grouping comprises use of the determined locations and a maximum allowed device-to-device transmission power, and where semi-persistently allocating radio resources operates to allocate radio resources to individual device (10) pairs of a particular spatial group in accordance with the time-hopped timeslot index sequences that are offset from one another so as to reduce an occurrence of interference with other spatial groups, and where semi-persistently allocating comprises transmitting an indication of the time-hopped timeslot index sequences to members of a particular spatial group using a control channel and a radio network identifier that is common to at least one of the devices of all device (10) pairs within the particular spatial group.

3. The method as in any one of the preceding claims, where determining comprises use of timing advance and direction of arrival parameters.

4. The method as in any one of claims 2 or 3, executed by a base station, and where the device (10) pairs of a particular spatial group are all located within a cell served by the base station, or where at least one device (10) pair of a particular spatial group is located within a cell served by a neighboring base station.

5. The method as in any one of the preceding claims, where the offset is a random offset or a pseudo-random offset, and /or where the offset is based on one of pseudo-noise, PN, sequences, m-sequences or Gold sequences.

6. The method as in any one of the preceding claims, further comprising spatially reusing at least some of the semi-persistently allocated radio resources for at least one other device pair, and /or further comprising limiting transmission power by a transmitting device of a device pair to be not greater than one of a physical uplink shared channel or a physical uplink control channel transmission power setting.

7. The method as in any one of the preceding claims, further comprising, in response to a need to increase device-to-device link efficiency, switching the device-to-device communication between a particular pair of devices to a cellular communication between the particular pair of devices, or dynamically allocating radio resources to at least one device pair based at least in part on channel quality indicators received from at least one of the devices of the at least one device pair.

8. The method as in any one of the preceding claims, where the radio resources comprise at least one of cellular network uplink radio resources and cellular network downlink radio resources.

9. A computer program comprising program code embodied in a tangible memory configured to perform any of the steps as in any one of the preceding claims when the program is run on a processor.

10. An apparatus, comprising:

a controller configured to semi-persistently allocate (9B) radio resources to individual device (10) pairs having determined spatial locations, the device (10) pairs involved in device-to-device communications, the radio resources being allocated in accordance with time-hopped timeslot index sequences that are offset rom one another so as to reduce an occurrence of interference with other device (10) pairs.

11. The apparatus of claim 10, said controller being further configured to group together device (10) pairs involved in device-to-device communications into a spatial group, and where the radio resources are allocated in accordance with the time-hopped timeslot index sequences that are offset from one another so as to reduce an occurrence of interference with other spatial groups.

12. The apparatus as in any of claims 10 to 11, where said controller is configured to use timing advance and direction of arrival parameters to determine the spatial locations.

**13.** The apparatus as in any one of claims 11 or 12, where said controller comprises a part of a base station, and where the device (10) pairs of a particular spatial group are all located within a cell served by the base station, or where at least one device pair of a particular spatial group is located within a cell served by another base station.

**14.** The apparatus as in any one of the preceding claims 11-13, further comprising a transmitter, and where said controller is further configured to transmit an indication of the time-hopped timeslot index sequences to members of a particular spatial group using a control channel and a radio network identifier that is common to at least one of the devices of all device (10) pairs within the particular spatial group.

**15.** The apparatus as in any of claims 10 to 14, where the offset is a random offset or a pseudo-random offset and /or where the offset is based on one of pseudo-noise, PN, sequences, m-sequences or Gold sequences.

**16.** The apparatus as in any of claims 10 to 15, said controller being further configured to spatially reuse at least some of the semi-persistently allocated radio resources for at least one other device pair, and /or to limit transmission power by a transmitting device of a device pair to be not greater than one of a physical uplink shared channel or a physical uplink control channel transmission power setting, and /or in response to a need to increase device-to-device link efficiency, to switch the device-to-device communication between a particular pair of devices to a cellular communication between the particular pair of devices.

**17.** The apparatus as in any one of claims 10-16, said controller being further configured, in response to a need to increase device-to-device link efficiency, a) to dynamically allocate radio resources to at least one device pair based at least in part on channel quality indicators received from at least one of the devices of the at least one device pair, or b) to group together device (10) pairs in accordance with the determined locations and a maximum allowed device-to-device transmission power.

**18.** The apparatus as in any of claims 10 to 17, where the radio resources comprise at least one of cellular network uplink radio resources and cellular network downlink radio resources.

**Patentansprüche**

**1.** Verfahren, das Folgendes umfasst:

Bestimmen (9A) von räumlichen Orten von Paaren von Vorrichtungen (10), die an Vorrichtung-zu-Vorrichtung-Kommunikationen beteiligt sind; und **gekennzeichnet durch**:

halbdauerhaftes Zuweisen (9B) von Funkressourcen zu individuellen Paaren von Vorrichtungen (10) gemäß Zeitsprung-Zeitschlitzindexsequenzen, die voneinander versetzt sind, um ein Auftreten einer Störung von anderen Paaren von Vorrichtungen (10) zu verringern.

**2.** Verfahren nach Anspruch 1, das ferner das Gruppieren von Paaren von Vorrichtungen (10) miteinander, die an Vorrichtung-zu-Vorrichtung-Kommunikationen beteiligt sind, in eine räumliche Gruppe umfasst, wobei das Gruppieren die Verwendung der bestimmten Orte und einer maximalen zulässigen Vorrichtung-zu-Vorrichtung-Übertragungsleistung umfasst, und wobei das halbdauerhafte Zuweisen von Funkressourcen arbeitet, um Funkressourcen zu individuellen Paaren von Vorrichtungen (10) einer speziellen räumlichen Gruppe gemäß den Zeitsprung-Zeitschlitzindexsequenzen zuzuweisen, die voneinander versetzt sind, um ein Auftreten einer Störung von anderen räumlichen Gruppen zu verringern, und wobei das halbdauerhafte Zuweisen das Übertragen einer Angabe der Zeitsprung-Zeitschlitzindexsequenzen zu Mitgliedern einer speziellen räumlichen Gruppe unter Verwendung eines Steuerkanals und eines Funknetz-Identifizierers umfasst, der mindestens einer der Vorrichtungen aller Paare von Vorrichtungen (10) innerhalb der speziellen räumlichen Gruppe gemeinsam ist.

**3.** Verfahren nach einem der vorangehenden Ansprüche, wobei das Bestimmen die Verwendung von Zeitfortschritts- und Ankunftsrichtungsparametern umfasst.

**4.** Verfahren nach einem der Ansprüche 2 oder 3, das durch eine Basisstation ausgeführt wird, und wobei die Paare von Vorrichtungen (10) einer speziellen räumlichen Gruppe alle innerhalb einer Zelle angeordnet sind, die durch die Basisstation bedient wird, oder wobei mindestens ein Paar von Vorrichtungen (10) einer speziellen räumlichen Gruppe innerhalb einer Zelle angeordnet ist, die durch eine benachbarte Basisstation bedient wird.

5. Verfahren nach einem der vorangehenden Ansprüche, wobei der Versatz ein zufälliger Versatz oder ein pseudozufälliger Versatz ist und/oder wobei der Versatz auf einer von Pseudorauschsequenzen, PN-Sequenzen, m-Sequenzen oder Gold-Sequenzen basiert.

6. Verfahren nach einem der vorangehenden Ansprüche, das ferner das räumliche Wiederverwenden von zumindest einigen der halbdauerhaft zugewiesenen Funkressourcen für mindestens ein anderes Vorrichtungspaar umfasst und/oder ferner das Begrenzen der Übertragungsleistung durch eine Übertragungsvorrichtung eines Vorrichtungspaars, so dass sie nicht größer ist als eine von einer Übertragungsleistungseinstellung eines physikalischen gemeinsam genutzten Aufwärtsstreckenkanals oder eines physikalischen Aufwärtsstrecken-Steuerkanals, umfasst.

7. Verfahren nach einem der vorangehenden Ansprüche, das ferner in Reaktion auf einen Bedarf, die Vorrichtung-zu-Vorrichtung-Verbindungseffizienz zu erhöhen, das Umschalten der Vorrichtung-zu-Vorrichtung-Kommunikation zwischen einem speziellen Paar von Vorrichtungen auf eine zellulare Kommunikation zwischen dem speziellen Paar von Vorrichtungen oder das dynamische Zuweisen von Funkressourcen zu mindestens einem Vorrichtungspaar auf der Basis zumindest teilweise von Kanalqualitätsindikatoren, die von mindestens einer der Vorrichtungen des mindestens einen Vorrichtungspaars empfangen werden, umfasst.

8. Verfahren nach einem der vorangehenden Ansprüche, wobei die Funkressourcen AufwärtsstreckenFunkressourcen eines zellularen Netzes und/oder Abwärtsstrecken-Funkressourcen eines zellularen Netzes umfassen.

9. Computerprogramm mit einem Programmcode, der in einem konkreten Speicher enthalten ist, der dazu konfiguriert ist, beliebige der Schritte, wie in irgendeinem der vorangehenden Ansprüche, durchzuführen, wenn das Programm auf einem Prozessor betrieben wird.

10. Gerät, das Folgendes umfasst:

eine Steuereinheit, die dazu konfiguriert ist, halbdauerhaft Funkressourcen zu individuellen Paaren von Vorrichtungen (10) mit bestimmten räumlichen Orten zuzuweisen (9B), wobei die Paare von Vorrichtungen (10) an Vorrichtung-zu-Vorrichtung-Kommunikationen beteiligt sind, wobei die Funkressourcen gemäß Zeitsprung-Zeitschlitzindexsequenzen zugewiesen werden, die voneinander versetzt sind, um ein Auftreten einer Störung von anderen Paaren von Vorrichtungen (10) zu verringern.

11. Gerät nach Anspruch 10, wobei die Steuereinheit ferner dazu konfiguriert ist, Paare von Vorrichtungen (10), die an Vorrichtung-zu-Vorrichtung-Kommunikationen beteiligt sind, in eine räumliche Gruppe miteinander zu gruppieren, und wobei die Funkressourcen gemäß den Zeitsprung-Zeitschlitzindexsequenzen zugewiesen werden, die voneinander versetzt sind, um ein Auftreten einer Störung von anderen räumlichen Gruppen zu verringern.

12. Gerät nach einem der Ansprüche 10 bis 11, wobei die Steuereinheit dazu konfiguriert ist, Zeitfortschritts- und Ankunftsrichtungsparameter zu verwenden, um die räumlichen Orte zu bestimmen.

13. Gerät nach einem der Ansprüche 11 oder 12, wobei die Steuereinheit einen Teil einer Basisstation umfasst, und wobei die Paare von Vorrichtungen (10) einer speziellen räumlichen Gruppe alle innerhalb einer Zelle angeordnet sind, die durch die Basisstation bedient wird, oder wobei mindestens ein Vorrichtungspaar einer speziellen räumlichen Gruppe innerhalb einer Zelle angeordnet ist, die durch eine andere Basisstation bedient wird.

14. Gerät nach einem der vorangehenden Ansprüche 11-13, das ferner einen Sender umfasst, und wobei die Steuereinheit ferner dazu konfiguriert ist, eine Angabe der Zeitsprung-Zeitschlitzindexsequenzen zu Mitgliedern einer speziellen räumlichen Gruppe unter Verwendung eines Steuerkanals und eines Funknetz-Identifizierers, der mindestens einer der Vorrichtungen aller Paare von Vorrichtungen (10) innerhalb der speziellen räumlichen Gruppe gemeinsam ist, zu übertragen.

15. Gerät nach einem der Ansprüche 10 bis 14, wobei der Versatz ein zufälliger Versatz oder ein pseudozufälliger Versatz ist und/oder wobei der Versatz auf einer von Pseudorauschsequenzen, PN-Sequenzen, m-Sequenzen oder Gold-Sequenzen basiert.

16. Gerät nach einem der Ansprüche 10 bis 15, wobei die Steuereinheit ferner dazu konfiguriert ist, zumindest einige der halbdauerhaft zugewiesenen Funkressourcen für mindestens ein weiteres Vorrichtungspaar räumlich wiederzuverwenden und/oder die Übertragungsleistung durch eine Übertragungsvorrichtung eines Vorrichtungspaars zu begrenzen, so dass sie nicht größer ist als eine von einer Übertragungsleistungseinstellung eines physikalischen gemeinsam genutzten Aufwärtsstreckenkanals oder eines physikalischen Aufwärtsstrecken-Steuerkanals, und/oder in Reaktion auf einen Bedarf, die Vorrichtung-zu-Vorrichtung-Verbindungseffizienz zu erhöhen, die Vorrichtung-zu-Vorrichtung-Kommunikation zwischen einem speziellen Paar von Vorrichtungen auf eine zellulare Kommunikation zwischen dem speziellen Paar von Vorrichtungen umzuschalten.

17. Gerät nach einem der Ansprüche 10-16, wobei die Steuereinheit ferner dazu konfiguriert ist, in Reaktion auf einen Bedarf, die Vorrichtung-zu-Vorrichtung-Verbindungseffizienz zu erhöhen, a) Funkressourcen zu mindestens einem Vorrichtungspaar auf der Basis zumindest teilweise von Kanalqualitätsindikatoren dynamisch zuzuweisen, die von mindestens einer der Vorrichtungen des mindestens einen Vorrichtungspaars empfangen werden, oder b) Paare von Vorrichtungen (10) gemäß den bestimmten Orten und einer maximalen zulässigen Vorrichtung-zu-Vorrichtung-Übertragungsleistung miteinander zu gruppieren.

18. Gerät nach einem der Ansprüche 10 bis 17, wobei die Funkressourcen Aufwärtsstreckenfunkressourcen eines zellularen Netzes und/oder Abwärtsstreckenfunkressourcen eines zellularen Netzes umfassen.


**Revendications**

1. Procédé, comprenant les étapes suivantes :

   déterminer (9A) des emplacements spatiaux de paires de dispositifs (10) impliquées dans une communication de dispositif à dispositif ; et **caractérisé par** :

      attribuer de façon semi-persistante (9B) des ressources radio à des paires de dispositifs (10) individuels selon des séquences d'index d'intervalles de temps avec sauts temporels qui sont décalées l'une par rapport à l'autre pour réduire l'apparition d'interférences avec d'autres paires de dispositifs (10).

2. Procédé selon la revendication 1, comprenant en outre : regrouper des paires de dispositifs (10) impliquées dans une communication de dispositif à dispositif en un groupe spatial, l'étape de regroupement comprenant utiliser des emplacements déterminés et une puissance de transmission de dispositif à dispositif autorisée maximum, et l'étape consistant à attribuer de façon semi-persistante des ressources radio permettant d'attribuer des ressources radio à des paires de dispositifs (10) individuels d'un groupe spatial particulier selon les séquences d'index d'intervalles de temps avec sauts temporels qui sont décalées l'une par rapport à l'autre pour réduire l'apparition d'interférences avec d'autres groupes spatiaux, et l'étape d'attribution semi-persistante comprenant : transmettre une indication des séquences d'index d'intervalles de temps avec sauts temporels aux membres d'un groupe spatial particulier en utilisant un canal de contrôle et un identifiant de réseau radio qui est commun à au moins un des dispositifs parmi toutes les paires de dispositifs (10) à l'intérieur du groupe spatial particulier.

3. Procédé selon l'une quelconque des revendications précédentes, dans lequel l'étape de détermination comprend : utiliser une avance de temps et une direction de paramètres d'arrivée.

4. Procédé selon l'une quelconque des revendications 2 ou 3, exécuté par une station de base, et dans lequel les paires de dispositifs (10) d'un groupe spatial particulier sont toutes situées à l'intérieur d'une cellule servie par la station de base, ou au moins une paire de dispositifs (10) d'un groupe spatial particulier étant située à l'intérieur d'une cellule servie par une station de base voisine.

5. Procédé selon l'une quelconque des revendications précédentes, dans lequel le décalage est un décalage aléatoire ou un décalage pseudo-aléatoire, et/ou le décalage étant basé sur un élément parmi des séquences de pseudo-bruit, des m-séquences ou des séquences Gold.

6. Procédé selon l'une quelconque des revendications précédentes, comprenant en outre . réutiliser spatialement au moins certaines des ressources radio attribuées de façon semi-persistante pour au moins une autre paire de dispositifs, et/ou comprenant en outre limiter une puissance de transmission par un dispositif de transmission d'une paire de dispositifs pour qu'elle ne soit pas supérieure à un paramètre de puissance de transmission d'un élément parmi un canal partagé de liaison montante physique ou un canal de contrôle de liaison montante physique.

7. Procédé selon l'une quelconque des revendications précédentes, comprenant en outre : en réponse à un besoin d'augmenter une efficacité de liaison de dispositif à dispositif, commuter la communication de dispositif à dispositif entre une paire particulière de dispositifs vers une communication cellulaire entre la paire particulière de dispositifs, ou attribuer dynamiquement des ressources radio à au moins une paire de dispositifs sur la base au moins en partie d'indicateurs de qualité de canal reçus à partir d'au moins un des dispositifs de ladite paire de dispositifs.

8. Procédé selon l'une quelconque des revendications précédentes, dans lequel les ressources radio comprennent au moins un élément parmi des ressources radio de liaison montante de réseau cellulaire et des ressources radio de liaison descendante de réseau cellulaire.

9. Programme d'ordinateur comprenant un code de programme stocké dans une mémoire matérielle configurée pour mettre en oeuvre l'une quelconque des étapes selon l'une quelconque des revendications précédentes lorsque le programme est exécuté sur un processeur.

10. Appareil, comprenant :

un contrôleur configuré pour attribuer (9B) de façon semi-persistante des ressources radio à des paires de dispositifs (10) individuels ayant des emplacements spatiaux déterminés, les paires de dispositifs (10) étant impliquées dans une communication de dispositif à dispositif, les ressources radio étant attribuées selon des séquences d'index d'intervalles de temps avec sauts temporels qui sont décalées l'une par rapport à l'autre pour réduire l'apparition d'interférences avec d'autres paires de dispositifs (10).

11. Appareil selon la revendication 10, ledit contrôleur étant en outre configuré pour regrouper des paires de dispositifs (10) impliquées dans une communication de dispositif à dispositif en un groupe spatial, et les ressources radio étant attribuées selon les séquences d'index d'intervalles de temps avec sauts temporels qui sont décalées l'une par rapport à l'autre pour réduire l'apparition d'interférences avec d'autres groupes spatiaux.

12. Appareil selon l'une quelconque des revendications 10 à 11, dans lequel ledit contrôleur est configuré pour utiliser une avance de temps et une direction de paramètres d'arrivée pour déterminer les emplacements spatiaux.

13. Appareil selon l'une quelconque des revendications 11 ou 12, dans lequel ledit contrôleur comprend une partie d'une station de base, et les paires de dispositifs (10) d'un groupe spatial particulier étant toutes situées à l'intérieur d'une cellule servie par la station de base, ou au moins une paire de dispositifs d'un groupe spatial particulier étant située à l'intérieur d'une cellule servie par une autre station de base.

14. Appareil selon l'une quelconque des revendications précédentes 11-13, comprenant en outre un émetteur, et ledit contrôleur étant en outre configuré pour transmettre une indication des séquences d'index d'intervalles de temps avec sauts temporels aux membres d'un groupe spatial particulier en utilisant un canal de contrôle et un identifiant de réseau radio qui est commun à au moins un des dispositifs parmi tous les paires de dispositifs (10) à l'intérieur du groupe spatial particulier.

15. Appareil selon l'une quelconque des revendications 10 à 14, dans lequel le décalage est un décalage aléatoire ou un décalage pseudo-aléatoire et/ou le décalage étant basé sur un élément parmi des séquences de pseudo-bruit PN, des m-séquences ou des séquences Gold.

16. Appareil selon l'une quelconque des revendications 10 à 15, ledit contrôleur étant en outre configuré pour réutiliser spatialement au moins certaines des ressources radio attribuées de façon semi-persistante pour au moins une autre paire de dispositifs, et/ou pour limiter une puissance de transmission par un dispositif de transmission d'une paire de dispositifs afin qu'elle ne soit pas supérieure à un paramètre de puissance de transmission d'un élément parmi un canal partagé de liaison montante physique ou un canal de contrôle de liaison montante physique, et/ou en réponse à un besoin d'augmenter une efficacité de liaison de dispositif à dispositif, pour commuter la communication de dispositif à dispositif entre une paire particulière de dispositifs vers une communication cellulaire entre la paire particulière de dispositifs.

17. Appareil selon l'une quelconque des revendications 10-16, ledit contrôleur étant en outre configuré pour, en réponse à un besoin d'augmenter une efficacité de liaison de dispositif à dispositif, a) attribuer dynamiquement des ressources radio à au moins une paire de dispositifs sur la base au moins en partie d'indicateurs de qualité de canal reçus à partir d'au moins un des dispositifs de ladite paire de dispositifs, ou b) regrouper des paires de dispositifs (10) selon les emplacements déterminés et une puissance de transmission de dispositif à dispositif autorisée maximum.

18. Appareil selon l'une quelconque des revendications 10 à 17, dans lequel les ressources radio comprennent au moins un élément parmi des ressources radio de liaison montante de réseau cellulaire et des ressources radio de liaison descendante de réseau cellulaire.

**FIG.1A**

ONE UPLINK
SLOT $T_{slot}$

$N_{symb}^{UL}$ SC–FDMA symbols $\quad k=N_{RB}^{UL}N_{SC}^{RB}-1$

RESOURCE
BLOCK
$N_{symb}^{UL} \times N_{SC}^{RB}$ RESOURCE
ELEMENTS

$N_{RB}^{UL} \times N_{SC}^{RB}$ subcarriers

$N_{SC}^{RB}$ subcarriers

RESOURCE
ELEMENT
(k,l)

$l=0$ $\qquad\qquad l=N_{symb}^{UL}-1$ $\qquad$ **FIG.1B**

$k=0$

ONE DOWNLINK
SLOT T$_{slot}$

$k=N_{RB}^{DL}N_{SC}^{RB}-1$

$N_{symb}^{DL}$ OFDM symbols

RESOURCE
BLOCK
$N_{symb}^{DL} \times N_{SC}^{RB}$ RESOURCE
ELEMENTS

$N_{RB}^{DL} \times N_{SC}^{RB}$ subcarrier s

$N_{SC}^{RB}$ subcarrier s

RESOURCE
ELEMENT
(k,l)

k=0

l=0

$l=N_{symb}^{DL}-1$

FIG.1C

FIG.2A

1, WIRELESS NETWORK

NCE/MME/GW
14
14A DP
14C PROG
14B MEM
OTHER NETWORK(s)/INTERNET

eNB
12
RESOURCE SCHEDULER
12D
12F DS
12E SPS
12A DP
12C PROG
12B MEM
13
15 TO OTHER eNBs

11

UE
10D
10A DP
10E MEASUREMENT UNIT
10C PROG
10B MEM
10

D2D PAIR
UE 10
UE 10

FIG.2B

EP 2 401 884 B1

FIG.3

FIG.5

FIG.6

FIG.4

FIG.7

ORTHOGONAL
(TIME) PRB
RESOURCES FOR
"CLOSE"
CLUSTERS AND
DEVICE PAIRS

SPATIAL RE-USE
OF PRB BETWEEN
CLUSTERS

P3 PAIR

P3U1(PAIR HEAD)

P2 PAIR

BASE STATION

DATA VIA TDD

P2U2

P1
PAIR

P1U1(PAIR HEAD)

P4
PAIR

DATA
VIA FDD

P2U1(PAIR HEAD)

DATA VIA
TDD

DATA VIA
TDD

P5 PAIR

P1U2

U1

U2

P3U2

GROUPS IN
SERVING CELL

GROUPS IN
NEIGHBOR
CELL

PRB ALLOCATION CO-ORDINATED ON X2 INTERFACE

EP 2 401 884 B1

FIG.8A

FIG.8B

DETERMINING SPATIAL LOCATIONS
OF DEVICE PAIRS INVOLVED IN
DEVICE—TO—DEVICE COMMUNICATIONS

9A

SEMI—PERSISTENLY ALLOCATING
RADIO RESOURCES TO INDIVIDUAL
DEVICE PAIRS IN ACCORDANCE WITH
TIME—HOPPED TIMESLOT INDEX
SEQUENCES THAT ARE OFFSET FROM
ONE ANOTHER SO AS TO REDUCE
AN OCCURRENCE OF INTERFERENCE
WITH OTHER DEVICE PAIRS

9B

## FIG.9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2005060182 A
- US 7308266 B
- US 20070153747 A

- EP 1480386 A2
- US 2005152329 A1

### Non-patent literature cited in the description

- 3rd Generation Partnership Project. *3GPP TS 36.300,* December 2008
- 3rd Generation Partnership Project. *3GPP TR 36.913,* 2008
- 3rd Generation Partnership Project. *3GPP TR 36.814,* January 2009
- 3rd Generation Partnership Project. *3GPP TS 36.101,* 2008
- 3rd Generation Partnership Project. *3GPP TS 36.213,* 2008
- 3rd Generation Partnership Project. *3GPP TS 36.321,* 2008
- 3rd Generation Partnership Project. *3GPP TS 36.331,* 2008
- 3rd Generation Partnership Project. *3GPP TS 36.211,* 2008

- **MAHMOOD FARHANG ; JAWAD A. SALEHI.** Spread-Time/Time-Hopping UWB CDMA Communication. *International Symposium on Communications and Information Technologies 2004 (ISCIT 2004),* 1047-1050
- **ANDREAS F. MOLISCH ; JINYUN ZHANG ; MAKATO MIYAKE.** Time hopping and frequency hopping in ultrawideband systems. *IEEE Pacific Rim Conference on Communications, Computers and Signal Processing (PACRM),* August 2003, vol. 2, 541-544
- **GOLD, R.** Optimal binary sequences for spread spectrum multiplexing (Corresp.). *IEEE Transactions on Information Theory,* 1967, vol. 13 (4), 619-621